# NEUE EUROPÄISCHE PATENTSCHRIFT

(11) **EP 2 414 430 B2**
(45) Veröffentlichungstag und Bekanntmachung des Hinweises auf die Entscheidung über den Einspruch: **13.09.2023**
(45) Hinweis auf die Patenterteilung: 04.10.2017
(21) Anmeldenummer: 10713605.3
(22) Anmeldetag: 30.03.2010
(51) Int. Cl.: C08G 65/00, C08G 75/23

(54) **VERFAHREN ZUR HERSTELLUNG VON CHLORARMEN POLYBIPHENYLSULFON-POLYMEREN**
METHOD FOR PRODUCING LOW-CHLORINE POLYBIPHENYL SULFONE POLYMERS
PROCÉDÉ DE PRÉPARATION DE POLYMÈRES DE POLYBIPHÉNYLSULFONE À FAIBLE TENEUR EN CHLORE

(30) Priorität: 03.04.2009 EP 09157282
(43) Veröffentlichungstag der Anmeldung: 08.02.2012
(73) Patentinhaber: BASF SE, 67056 Ludwigshafen am Rhein (DE)
(72) Erfinder: WEBER, Martin, 67487 Maikammer (DE); MALETZKO, Christian, 67122 Altrip (DE); LANGE, Gerhard, 69198 Schriesheim (DE); ERBES, Jörg, 76137 Karlsruhe (DE); DIETRICH, Matthias, 69469 Weinheim (DE); INCHAURRONDO, Nicolas, 68165 Mannheim (DE)
(74) Vertreter: Baier, Martin
(86) Internationale Anmeldenummer: PCT/EP2010/054206
(87) Internationale Veröffentlichungsnummer: WO 2010/112508

(56) Entgegenhaltungen:
- EP-A2- 0 106 023
- EP-A2- 0 347 669
- WO-A1-00/18824
- WO-A2-01/66620
- JP-A- H0 395 220
- JP-A- H04 202 431

## Beschreibung

Die vorliegende Erfindung betrifft ein Verfahren zur Herstellung von chlorarmen Polybiphenylsulfon-Polymeren, die so erhältlichen Polybiphenylsulfon-Polymere, Polybiphenylsulfon-Polymere mit einem Gehalt an organisch gebundenem Chlor von weniger als 800 ppm, thermoplastische Formmassen und Formkörper, Fasern, Filme, Membrane oder Schäume enthaltend die genannten Polybiphenylsulfon-Polymere sowie deren Verwendung zur Herstellung von Formkörpern, Fasern, Filmen, Membranen oder Schäumen.

Polybiphenylsulfon-Polymere gehören zur Gruppe der Polyarylenether, und damit zur Klasse der Hochleistungsthermoplaste. Neben der hohen Wärmeformbeständigkeit weisen die Polybiphenylsulfon-Polymere eine überragende Kerbschlagzähigkeit und exzellentes Brandverhalten auf, wie beispielsweise beschrieben in: E.M. Koch, H.-M. Walter, Kunststoffe 80 (1990) 1146; E. Döring, Kunststoffe 80, (1990) 1149; und N. Inchaurondo-Nehm, Kunststoffe 98, (2008) 190.

Die Herstellung von Polybiphenylsulfon-Polymeren ist beispielsweise aus der DE 1957091 und der EP 000361 bekannt. Die WO 2000/018824 offenbart ein Verfahren zur Herstellung von Polybiphenylsulfon-Polymeren mit einem geringen Anteil zyklischer Oligomere. Die EP 1272547 beschreibt Polybiphenylsulfon-Polymere mit besonders geringer Eigenfarbe, erhalten durch Kondensation der Monomere 4,4'-Dihydroxybiphenyl und 4,4'-Dichlordiphenylsulfon in Anwesenheit feinteiliger Pottasche.

Im Stand der Technik werden die Edukte üblicherweise in äquimolaren Mengen eingesetzt. Der aus den bekannten Verfahren resultierende Gehalt an organisch gebundenem Chlor in den Polybiphenylsulfon-Polymeren ist jedoch für viele Anwendungen zu hoch und genügt häufig Brandschutzerfordernissen nicht. Für Anwendungen im Bereich der Elektronik wie z. B. Schalter, Gehäuse, Folien werden oft Chlorgehalte von weniger als 1000 ppm gefordert. Zudem weisen die bekannten Polybiphenylsulfon-Polymere einen hohen Restlösungsmittelgehalt auf.

Die Umsetzung der oben genannten Monomere in N-Methylpyrrolidon (NMP) als Lösungsmittel ist an sich ebenfalls bekannt, beispielsweise aus der EP 0 347 669. NMP besitzt unter anderem eine Reihe von verfahrenstechnischen Vorteilen. So lassen sich die Monomere und das als Base verwendete Kaliumcarbonat gut in NMP lösen; weiterhin ist eine Reaktionsführung ohne zusätzliches Schleppmittel für das entstehende Reaktionswasser möglich. Die Durchführung der Polykondensation zur Herstellung von Polybiphenylsulfon-Polymeren in NMP als Lösungsmittel ist deshalb aus verfahrenstechnischen Gründen wünschenswert.

Die oben genannten Monomere weisen in NMP als Lösungsmittel eine außerordentlich hohe Reaktivität auf. Hierdurch ergeben sich bei Verwendung von NMP als Lösungsmittel in vielen Fällen Schwierigkeiten bei der Kontrolle der Viskositätszahl (VZ), welche den Polymerisationsgrad charakterisiert.

Aus J.E. McGrath et. al., Polymer 25 (1984), 1827 ist dem Fachmann bekannt, wie das Molekulargewicht bei der Kondensation von Polyarylensulfonen auf Basis von Bisphenol-A gesteuert werden kann. Kommerzielle Polyarylenether wie z.B. Sumika Excel^{®} weisen überwiegend Chlorendgruppen auf. Ein Verfahren zur Herstellung von Polybiphenylsulfon-Polymeren in NMP unter Verwendung eines Überschusses an der aromatischen Dihydroxyverbindung ist bislang nicht bekannt.

Die aus dem Stand der Technik bekannten Polybiphenylsulfon-Polymere weisen darüber hinaus eine in vielen Fällen unzureichende Reißdehnung, verbesserungsbedürftige Kerbschlagzähigkeit und ein oft unzureichendes Fließverhalten bei niedrigen Scherraten auf.

Die Polybiphenylsulfon-Polymere der vorliegenden Erfindung sollten die vorgenannten Nachteile nicht oder in geringerem Maße aufweisen. Es war insbesondere eine Aufgabe der vorliegenden Erfindung, ein Verfahren zur Herstellung von Polybiphenylsulfon-Polymeren mit den genannten Eigenschaften zur Verfügung zu stellen, welches deren Herstellung bei guter Kontrolle des Molekulargewichts ermöglicht. Die Polybiphenylsulfon-Polymere sollten insbesondere eine niedrige Viskosität bei niedriger Scherrate aufweisen und in einem Formwerkzeug gut fließen.

Die Aufgabe der vorliegenden Erfindung bestand darüber hinaus darin, Polybiphenylsulfon-Polymere bereitzustellen, welche überlegene mechanische Eigenschaften, insbesondere eine hohe Reißdehnung und eine hohe Kerbschlagzähigkeit, aufweisen, einen geringen Anteil an polymergebundenem Chlor enthalten und außerdem einen gegenüber dem Stand der Technik reduzierten Restlösungsmittelanteil aufweisen. Polybiphenylsulfon-Polymere mit einem Gehalt von polymergebundenem Chlor von weniger als 800 ppm sind aus dem Stand der Technik bislang nicht bekannt.

Die vorliegende Aufgabe wird gelöst durch ein Verfahren zur Herstellung von Polybiphenylsulfon-Polymeren umfassend gemäß Schritt (a) die Umsetzung der Komponente (a1) bestehend aus mindestens einer aromatischen Dihydroxyverbindung und (a2) 4,4'-Dichlordiphenylsulfon, wobei die Komponente (a1) 4,4'-Dihydroxybiphenyl umfasst und die Umsetzung mit einem molaren Überschuss der Komponente (a1) in einem Lösungsmittel umfassend N-Methylpyrrolidon durchgeführt wird, sowie durch die so erhältlichen Polybiphenylsulfon-Polymere. Bevorzugte Ausführungsformen sind den Ansprüchen und der folgenden Beschreibung zu entnehmen. Kombinationen bevorzugter Ausführungsformen verlassen den Rahmen der vorliegenden Erfindung nicht. Unter Polybiphenylsulfon-Polymer sollen Polyarylenethersulfone verstanden werden, welche 4,4'-Dihydroxybiphenyl als Monomereinheit umfassen. Polybiphenylsulfon selbst ist auch als Polyphenylsulfon bekannt, wird als PPSU bezeichnet, und ist aus den Monomereinheiten 4,4'-Dichlordiphenylsulfon und 4,4'-Dihydroxybiphenyl aufgebaut.

Im Rahmen der vorliegenden Erfindung wird zur Charakterisierung der Struktur der Polybiphenylsulfon-Polymere auf die eingesetzten Monomereinheiten Bezug genommen. Es ist für den Fachmann offensichtlich, dass die Monomereinheiten im Polymer in umgesetzter Form vorliegen und dass die Umsetzung der Monomereinheiten durch nucleophile aromatische Polykondensation unter rechnerischer Abspaltung einer Einheit Halogenwasserstoff als Abspaltungsgruppe erfolgt. Folglich ist die Struktur des resultierenden Polymers unabhängig von der genauen Art der Abspaltungsgruppe.

Die Umsetzung der Komponenten (a1) und (a2) zu einem Polybiphenylsulfon-Polymer ist dem Fachmann in Bezug auf die Temperatur, das Lösungsmittel und die Zeitdauer an sich bekannt. Die Umsetzung der Ausgangsverbindungen (a1) und (a2) wird bei einer Temperatur von 80 bis 250°C, bevorzugt 100 bis 220°C durchgeführt, wobei die Obergrenze der Temperatur durch den Siedepunkt des Lösungsmittels begrenzt wird. Die Umsetzung erfolgt vorzugsweise in einem Zeitintervall von 2 bis 12 h, insbesondere von 3 bis 8 h.

Die Verwendung eines Überschusses der Komponente (a1) trägt dazu bei, insbesondere bei hohen Umsätzen den Gehalt an polymergebundenem Chlor zu reduzieren. Das molare Verhältnis der eingesetzten Komponenten (a1) zu (a2) beträgt von 1,01 bis 1,05, bevorzugt von 1,015 bis 1,04. Hierdurch lässt sich das Molekulargewicht besonders effektiv steuern und kontrollieren. Für die vorliegende Erfindung sind die Reaktionsbedingungen so zu wählen, dass der Umsatz (U) mindestens 95 %, besonders bevorzugt mindestens 98 % beträgt. Unter Umsatz U wird im Rahmen der vorliegenden Erfindung der molare Anteil der umgesetzten reaktiven Gruppen (d. h. Hydroxy- und Chlorgruppen) verstanden. Das Endprodukt weist eine mehr oder weniger breite Molekulargewichtsverteilung ggf. einschließlich von Oligomeren auf, wobei die Endgruppen entweder Chlor- oder Hydroxygruppen, beziehungsweise im Fall der weiteren Umsetzung Alkyl- oder Aryloxygruppen, darstellen und rechnerisch dem von 100 % abweichenden Umsatz entsprechen.

Es wurde überraschenderweise gefunden, dass ein besonders niedriger Gehalt an polymergebundenem Chlor gefunden wird, wenn als Lösungsmittel ein solches verwendet wird, das N-Methylpyrrolidon umfasst. Ausschließlich N-Methylpyrrolidon ist als Lösungsmittel ganz besonders bevorzugt. N-Methylpyrrolidon trägt gleichzeitig zu einem hohen Umsatz der Komponenten (a1) und (a2) bei, da die Reaktion der erfindungsgemäß zum Einsatz kommenden Monomere besonders effizient verläuft.

Erfindungsgemäß besteht Komponente (a1) aus mindestens einer aromatischen Dihydroxyverbindung und umfasst 4,4'-Dihydroxybiphenyl. Darüber hinaus kann Komponente (a1) insbesondere folgende Verbindungen umfassen:
- Dihydroxybenzole, insbesondere Hydrochinon und/oder Resorcin;
- Dihydroxynaphthaline, insbesondere 1,5-Dihydroxynaphthalin, 1,6-Dihydroxynaphthalin, 1,7-Dihydroxynaphthalin, und/oder 2,7-Dihydroxynaphthalin;
- Andere Dihydroxybiphenyle als 4,4'-Dihydroxybiphenyl, insbesondere 2,2'-Dihydroxybiphenyl;
- Bisphenylether, insbesondere Bis(4-hydroxyphenyl)ether und Bis(2-hydroxyphenyl)ether;
- Bisphenylpropane, insbesondere 2,2-Bis(4-hydroxyphenyl)propan, 2,2-Bis(3-methyl-4-hydroxyphenyl)propan, und/oder 2,2-Bis(3,5-dimethyl-4-hydroxyphenyl)propan;
- Bisphenylmethane, insbesondere Bis(4-hydroxyphenyl)methan
- Bisphenylcyclohexane, insbesondere Bis(4-hydroxyphenyl)-2,2,4-trimethylcyclohexan;
- Bisphenylsulfone, insbesondere Bis(4-hydroxyphenyl)sulfon;
- Bisphenylsulfide, insbesondere Bis(4-hydroxyphenyl)sulfid;
- Bisphenylketone, insbesondere Bis(4-hydroxyphenyl)keton;
- Bisphenylhexafluoropropane, insbesondere 2,2-Bis(3,5-dimethyl-4-hydroxyphenyl)hexafluoropropan; und/oder
- Bisphenylfluorene, insbesondere 9,9-Bis(4-hydroxyphenyl)fluoren.

Die Komponente (a1) enthält mindestens 80 Gew.-% 4,4'-Dihydroxybiphenyl. Ganz besonders bevorzugt ist die Komponente (a1) 4,4'-Dihydroxybiphenyl.

Im Rahmen der vorliegenden Erfindung in Mischung mit N-Methyl-2-pyrrolidon (NMP) verwendbare Lösungsmittel sind andere aprotische polare Lösungsmittel als NMP. Geeignete Lösungsmittel weisen dabei einen Siedepunkt im Bereich von 80 bis 320°C, insbesondere 100 bis 280°C, bevorzugt von 150 bis 250°C auf. Geeignete polar aprotische Lösungsmittel sind insbesondere hochsiedende Ether, Ester, Ketone, asymmetrisch halogenierte Kohlenwasserstoffe, Anisol, Dimethylformamid, Dimethylsulfoxid und Sulfolan. N-Methyl-2-pyrrolidon (NMP) ist als Lösungsmittel jedoch besonders bevorzugt.

Die Umsetzung der Komponenten (a1) und (a2) erfolgt vorzugsweise in Gegenwart einer Base (B), um die Reaktivität gegenüber den Halogensubstituenten der Ausgangsverbindungen (a2) zu erhöhen. Es ist bevorzugt ausgehend von den vorgenannten aromatischen Dihydroxyverbindungen (a1) durch Zugabe einer Base (B) ihre Dikalium- oder Dinatriumsalze herzustellen und mit der Komponente (a1) zur Reaktion zu bringen. Geeignete Basen (B) sind dem Fachmann bekannt. Bevorzugte Basen sind insbesondere Alkalimetallcarbonate.

Vorzugsweise sind die Basen wasserfrei. Geeignete Basen sind insbesondere wasserfreies Alkalicarbonat, vorzugsweise Natrium-, Kalium-, Calciumcarbonat oder Mischungen davon, wobei Kaliumcarbonat ganz besonders bevorzugt ist. Eine besonders bevorzugte Kombination ist N-Methyl-2-pyrrolidon als Lösungsmittel und wasserfreies Kaliumcarbonat als Base.

Es hat sich zudem als vorteilhaft herausgestellt, im Rahmen von Schritt (a) die Menge des Polybiphenylsulfon-Polymers bezogen auf das Gesamtgewicht der Mischung aus Polybiphenylsulfon-Polymer und Lösungsmittel von 10 bis 70 Gew.-%, vorzugsweise von 15 bis 50 Gew.-% einzustellen.

In einer bevorzugten Ausführungsform wird während oder nach der Umsetzung mindestens eine aromatische organische Monochlorverbindung als Komponente (a3) zugegeben. Es besteht die Vorstellung, dass die aromatische organische Monochlorverbindung als Kettenregler fungiert. Vorzugsweise weist die aromatische organische Monochlorverbindung eine ähnliche Reaktivität im Rahmen der Umsetzung auf wie die Komponente (a2).

Vorzugsweise ist die Komponente (a3) ein aromatisches Monochlorsulfon, insbesondere Monochlordiphenylsulfon. In einer bevorzugten Ausführungsform wird der Überschuss der Komponente (a1) durch die aromatische organische Monochlorverbindung (a3) ausgeglichen, welche eine unter den Bedingungen der Umsetzung der Komponenten (a1) und (a2) reaktive Chlorgruppe enthält.

Die molare Menge der Komponente (a3) wird vorzugsweise so gewählt, dass das Doppelte des Überschusses der molaren Menge der Komponente (a1) gegenüber der molaren Menge der Komponente (a2) im Verhältnis zur molaren Menge der Komponente (a3) von 0,98 bis 1,02, insbesondere von 0,99 bis 1,01 beträgt. Demgemäß beträgt 2*((a1) - (a2)) / (a3) vorzugsweise von 0,98 bis 1,02, insbesondere von 0,99 bis 1,01, wobei (a1), (a2) und (a3) die eingesetzten molaren Mengen der jeweiligen Komponente widerspiegeln.

Das Doppelte des Verhältnisses ((a1) - (a2) / (a3)) beträgt dabei vorzugsweise 1.

In einer weiteren bevorzugten Ausführungsform, die mit den vorgenannten Ausführungsformen vorteilhaft verknüpft werden kann, erfolgt in Anschluss an Schritt (a) gemäß Schritt (b) eine Umsetzung mit mindestens einer aliphatischen organischen Halogenverbindung. Hierdurch werden reaktive Hydroxy-Endgruppen weiter umgesetzt und so ein Abbau der Polymerkette verhindert.

Bevorzugte aliphatische organische Halogenverbindungen sind Alkylhalogenide, insbesondere Alkylchloride mit linearen oder verzweigten Alkylgruppen mit von 1 bis 10 Kohlenstoffatomen, insbesondere primäre Alkylchloride, besonders bevorzugt Methylhalogenid, insbesondere Methylchlorid.

Die Umsetzung gemäß Schritt (b) wird vorzugsweise bei einer Temperatur von 90° bis 160°C, insbesondere von 100°C bis 150°C durchgeführt. Die Zeitdauer kann über einen weiten Zeitraum variieren und beträgt üblicherweise mindestens 5 Minuten, insbesondere mindestens 15 Minuten. Vorzugsweise beträgt die Zeitdauer der Umsetzung gemäß Schritt (b) von 15 Minuten bis 8 Stunden, insbesondere von 30 Minuten bis 4 Stunden.

Die Zugabe der aliphatischen organischen Halogenverbindung kann über verschiedene Methoden erfolgen. Darüber hinaus kann die aliphatische organische Halogenverbindung stöchiometrisch oder im Überschuss erfolgen, wobei der Überschuss beispielsweise bis zu 5-fach sein kann. In einer bevorzugten Ausführungsform erfolgt die Zugabe der aliphatischen organischen Halogenverbindung kontinuierlich, insbesondere durch kontinuierliche Zuführung als Gasstrom.

Es hat sich als vorteilhaft erwiesen, in Anschluss an Schritt (a) und ggf. Schritt (b) eine Filtration der Polymerlösung durchzuführen. Hierdurch wird der bei der Polykondensation gebildete Salzanteil sowie eventuell gebildete Gelkörper entfernt.

Ein weiterer Gegenstand der vorliegenden Erfindung sind Polybiphenylsulfon-Polymere, welche gemäß dem erfindungsgemäßen Verfahren erhältlich sind sowie Polybiphenylsulfon-Polymere mit einem Gehalt an polymergebundenem Chlor von weniger als 800 ppm, insbesondere weniger als 700 ppm.

Die erfindungsgemäßen Polybiphenylsulfon-Polymere weisen vorzugsweise einen Gehalt an polymergebundenem Chlor von weniger als 800 ppm, insbesondere weniger als 750 ppm, besonders bevorzugt weniger als 700 ppm auf. Die untere Grenze des Gehaltes an polymergebundenem Chlor beträgt verfahrensbedingt üblicherweise mindestens 400 ppm, insbesondere mindestens 500 ppm.

Der Chlorgehalt des erhältlichen Polymers entspricht dem Gehalt an Chlorendgruppen und wird im Rahmen der vorliegenden Erfindung mittels Atomspektroskopie bestimmt. Der Gehalt an polymergebundenem Chlor bezieht sich im Rahmen der vorliegenden Erfindung grundsätzlich auf den Gewichtsanteil und kann alternativ in mg pro kg Einwaage des Polymers angegeben werden.

Polymerzusammensetzungen, welche nach dem erfindungsgemäßen Verfahren erhältlich sind, weisen besonders bevorzugt einen Gehalt an polymergebundenem Chlor von weniger als 700 ppm und gleichzeitig einen Anteil an Restlösungsmittel von weniger als 500 ppm auf.

Die erfindungsgemäßen Polybiphenylsulfon-Polymere zeichnen sich darüber hinaus durch eine Reißdehnung im Zugversuch von mehr als 50 % aus.

Ein weiterer Gegenstand der vorliegenden Erfindung sind thermoplastische Formmassen enthaltend ein erfindungsgemäßes Polybiphenylsulfon-Polymer.

Die thermoplastische Formmassen der vorliegenden Erfindung können neben dem erfindungsgemäßen Polybiphenylsulfon-Polymer außerdem mindestens ein Polymer ausgewählt aus Polyarylenethersulfonen (andere als die erfindungsgemäßen Polybiphenylsulfon-Polymere), insbesondere Polyethersulfon (PES) und/oder Polysulfon (PSU), sowie Polyetherimide, Polyphenylensulfiden, Polyetheretherketone, Polyimide oder Poly-p-phenylene enthalten.

Die erfindungsgemäßen Formmassen können darüber hinaus Füllstoffe, insbesondere Fasern, besonders bevorzugt Glasfasern enthalten. Entsprechende Füllstoffe sind dem Fachmann bekannt.

Sofern Füllstoffe zum Einsatz kommen, dann werden diese vorzugsweise in einer Menge von 5 bis 150 Gewichtsteilen bezogen auf 100 Gewichtsteile Polymer zugegeben.

In den erfindungsgemäßen thermoplastischen Formmassen können insbesondere alle dem Fachmann bekannten und für den Einsatz in thermoplastischen Formmassen geeigneten Glasfasern vorliegen. Diese Glasfasern können nach dem Fachmann bekannten Verfahren hergestellt und, gegebenenfalls, oberflächenbehandelt werden. Die Glasfasern können zur besseren Verträglichkeit mit dem Matrixmaterial mit einer Schlichte, ausgerüstet sein, wie z.B. in DE 10117715 beschrieben.

In einer bevorzugten Ausführungsform werden Glasfasern mit einem Durchmesser von 5 bis 15 µm, bevorzugt 7 bis 13 µm, besonders bevorzugt 9 bis 11 µm eingesetzt.

Die Einarbeitung der Glasfasern kann sowohl in Form von Schnittglasfasern als auch in Form von Endlossträngen (Rovings) erfolgen. Die Länge der einsetzbaren Glasfasern beträgt in der Regel vor Einarbeitung als Schnittglasfasern in die thermoplastischen Formmassen typischerweise 4 bis 5 mm. Nach der Verarbeitung der Glasfasern, beispielsweise durch Co-Extrusion, mit den anderen Komponenten liegen die Glasfasern üblicherweise in einer mittleren Länge von 100 bis 400 µm, bevorzugt 200 bis 350 µm vor.

Die erfindungsgemäßen Formmassen können als weitere Komponente K Hilfsstoffe, insbesondere Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Der Anteil der weiteren Komponenten K in den erfindungsgemäßen Formmassen beträgt insbesondere von 0 bis zu 30, vorzugsweise von 0 bis zu 20 Gew.-%, insbesondere 0 bis 15 Gew.-%, bezogen auf das Gesamtgewicht der thermoplastischen Formmasse. Im Fall, dass es sich bei der Komponente K um Stabilisatoren handelt, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf das Gesamtgewicht der thermoplastischen Formmasse.

Pigmente und Farbstoffe sind allgemein in Mengen von 0 bis 10, bevorzugt von 0,05 bis 7 und insbesondere von 0,1 bis 5 Gew.-%, bezogen auf das Gesamtgewicht der thermoplastischen Formmasse enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [2 PbCO₃·Pb(OH)₂], Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz [Cu(Cr, Fe)₂O₄], Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird. Siehe hierzu G. Benzing, Pigmente für Anstrichmittel, Expert-Verlag (1988), Seiten 78 ff.

Zur Einstellung bestimmter Farbtöne können anorganische Buntpigmente, wie Chromoxidgrün oder organische Buntpigmente, wie Azopigmente oder Phthalocyanine eingesetzt werden. Derartige Pigmente sind allgemein im Handel üblich.

Oxidationsverzögerer und Wärmestabilisatoren, die den thermoplastischen Massen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder Iodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf bezogen auf das Gesamtgewicht der thermoplastischen Formmasse, einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% bezogen auf bezogen auf das Gesamtgewicht der thermoplastischen Formmasse zugesetzt werden, sind Stearylalkohol, Stearinsäurealkylester und -amide sowie Ester des Pentaerythrits mit langkettigen Fettsäuren. Es können auch Dialkylketone, zum Beispiel Distearylketon, eingesetzt werden.

Als bevorzugten Bestandteil enthalten die erfindungsgemäßen Formmassen von 0,1 bis 2, bevorzugt 0,1 bis 1,75, besonders bevorzugt 0,1 bis 1,5 Gew.-% und insbesondere von 0,1 bis 0,9 Gew.-% (bezogen auf das Gesamtgewicht der thermoplastischen Formmasse) an Stearinsäure und/oder Stearaten. Im Prinzip können auch andere Stearinsäurederivate wie Ester der Stearinsäure eingesetzt werden.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70°C, je nach Zusammensetzung des Produkts. Bevorzugt werden Produkte mit einem Anteil an Stearinsäure von mehr als 20, besonders bevorzugt mehr als 25 Gew.-% verwendet. Es kann auch reine Stearinsäure (> 98 %) verwendet werden.

Des Weiteren können die erfindungsgemäßen Formmassen auch Stearate enthalten. Stearate können entweder durch Umsetzung entsprechender Natriumsalze mit Metallsalzlösungen (zum Beispiel CaCl₂, MgCl₂, Aluminiumsalzen) oder durch direkte Umsetzung der Fettsäure mit Metallhydroxid hergestellt werden (siehe zum Beispiel Baerlocher Additives, 2005). Bevorzugt wird Aluminiumtristearat verwendet.

Die Reihenfolge, in der die Bestandteile der erfindungsgemäßen thermoplastischen Formmasse gemischt werden, ist beliebig.

Die erfindungsgemäßen Formmassen können nach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextrudern, vorzugsweise Zweischneckenextrudern, Brabender-Mischern oder Banbury-Mischern sowie Knetern mischt und anschließend extrudiert. Nach der Extrusion wird das Extrudat abgekühlt und zerkleinert. Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Durchmischung zu erhalten, ist eine intensive Durchmischung vorteilhaft. Dazu sind im Allgemeinen mittlere Mischzeiten von 0,2 bis 30 Minuten bei Temperaturen von 280 bis 380°C, bevorzugt 290 bis 370°C, erforderlich. Nach der Extrusion wird das Extrudat in der Regel abgekühlt und zerkleinert.

Die erfindungsgemäßen Formmassen zeichnen sich durch gute Fließfähigkeit, hohe Zähigkeit, vor allem Reißdehnung und Kerbschlagzähigkeit und durch eine hohe Oberflächenqualität aus. Die erfindungsgemäßen Formmassen eignen sich daher zur Herstellung von Formteilen für Haushaltsartikel, elektrische oder elektronische Bauteile sowie für Formteile für den Fahrzeugsektor.

Die erfindungsgemäßen thermoplastischen Formmassen können vorteilhaft zur Herstellung von Formkörpern, Fasern, Filmen, Membranen oder Schäume verwendet werden. Ein weiterer Gegenstand der vorliegenden Erfindung sind entsprechend Formkörpern, Fasern, Filmen, Membranen oder Schäume enthaltend die erfindungsgemäßen thermoplastischen Formmassen.

Die folgenden Beispiele erläutern die Erfindung näher, ohne sie einzuschränken.

### Beispiele

Die Viskositätszahl der Polybiphenylsulfone wurde in 1 %iger Lösung von N-Methylpyrrolidon bei 25°C bestimmt.

Die erhaltenen Produkte wurden bei einer Massetemperatur von 370°C in einem Zweischneckenextruder (ZSK 18) granuliert. Die Verarbeitung zu Probekörpern erfolgte bei 375°C Massetemperatur und 160°C Werkzeugtemperatur.

Die Zugversuche wurden nach ISO 527 durchgeführt, die Kerbschlagzähigkeit wurde nach ISO 179 1eA bestimmt.

Die Fließfähigkeit der Produkte wurde in einem Kapillarrheometer bei 380°C bestimmt. Die Methode ist beispielsweise in "Praktische Rheologie der Kunststoffe und Elastomere" VDI Verlag 1991, Seite 234 ff beschrieben. Ausgewertet wurde das Verhältnis der Viskosität bei hoher (2000 Hz) und niedriger Scherrate (50 Hz).

Die verwendeten Monomere (4,4'-Dichlordiphenylsulfon, 4,4'-Dihydroxybiphenyl) wiesen eine Reinheit von mehr als 99,5 % auf.

Es wurden verschiedene Qualitäten von wasserfreiem K₂CO₃ eingesetzt. Die mittlere Partikelgröße ist als volumengewichteter Mittelwert des Teilchendurchmessers zu verstehen und wurde mit einem Mastersizer 2000 Partikelmessgerät an einer Suspension der Partikel in einer Mischung aus Chlorbenzol/Sulfolan (60/40 Gewichtsanteil) bestimmt.
Pottasche A: mittlere Partikelgröße von 61 µm
Pottasche B: mittlere Partikelgröße von 120 µm.

### Vergleichsversuch 1

Durch nucleophile aromatische Polykondensation von 287,08 g (1,00 mol) 4,4'-Dichlordiphenylsulfon, 186,21 g (1,00 mol) 4,4'-Dihydroxybiphenyl, unter Einwirkung von 145,12 g (1,05 mol) Kaliumcarbonat (Pottasche A) in 1050 ml NMP wurde ein Polybiphenylsulfon erhalten. Diese Mischung wurde 1 Stunde bei 190°C gehalten. Danach wurde der Ansatz durch Zugabe von 975 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 110,3 ml/g, die Glastemperatur bei 226°C. Aufgrund der hohen Schmelzeviskosität konnte das Produkt nicht granuliert werden.

### Vergleichsversuch 2

Durch nucleophile aromatische Polykondensation von 287,08 g (1,00 mol) 4,4'-Dichlordiphenylsulfon, 186,21 g (1,00 mol) 4,4'-Dihydroxybiphenyl, unter Einwirkung von 145,12 g (1,05 mol) Kaliumcarbonat (Pottasche A) in 1050 ml NMP wurde ein Polybiphenylsulfon erhalten. Diese Mischung wurde 2 Stunden bei 180°C gehalten. Danach wurde der Ansatz durch Zugabe von 450 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 115,2 ml/g, die Glastemperatur bei 226°C. Aufgrund der hohen Schmelzeviskosität konnte das Produkt nicht granuliert werden.

### Vergleichsversuch 3

Durch nucleophile aromatische Polykondensation von 287,08g (1,00 mol) 4,4'-Dichlordiphenylsulfon, 186,21 g (1,00 mol) 4,4'-Dihydroxybiphenyl, unter Einwirkung von 143,05 g (1,035 mol) Kaliumcarbonat (Pottasche A) in 1050 ml NMP wurde ein Polybiphenylsulfon erhalten. Diese Mischung wurde 2,16 Stunden bei 190°C gehalten. Danach wurde der Ansatz durch Zugabe von 450 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 58,6 ml/g, die Glastemperatur bei 225°C.

### Vergleichsversuch 4

Durch nucleophile aromatische Polykondensation von 574,16 g (2,00 mol) 4,4'-Dichlordiphenylsulfon, 372,42 g (2,00 mol) 4,4'-Dihydroxybiphenyl, unter Einwirkung von 280,56 g (2,03 mol) Kaliumcarbonat (Pottasche A) in 2100 ml NMP wurde ein Polybiphenylsulfon erhalten. Diese Mischung wurde 6,25 Stunden bei 180°C gehalten. Danach wurde der Ansatz durch Zugabe von 900 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 82,9 ml/g, die Glastemperatur bei 227°C.

### Vergleichsversuch 5 (Überschuss DCDPS)

Durch nucleophile aromatische Polykondensation von 586,75 g (2,044 mol) 4,4'-Dichlordiphenylsulfon, 372,42 g (2,00 mol) 4,4'-Dihydroxybiphenyl, unter Einwirkung von 286,09 g (2,07 mol) Kaliumcarbonat (Pottasche A) in 2100 ml NMP wurde ein Polybiphenylsulfon erhalten. Diese Mischung wurde 6 Stunden bei 180°C gehalten. Danach wurde der Ansatz durch Zugabe von 900 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 72,8 ml/g, die Glastemperatur bei 225°C.

### Vergleichsversuch 6 (Überschuss DCDPS)

Durch nucleophile aromatische Polykondensation von 586,75 g (2,044 mol) 4,4'-Dichlordiphenylsulfon, 372,42 g (2,00 mol) 4,4'-Dihydroxybiphenyl, unter Einwirkung von 286,09 g (2,07 mol) Kaliumcarbonat (Pottasche A) in 2100 ml NMP wurde ein Polybiphenylsulfon erhalten. Diese Mischung wurde 6 Stunden bei 180°C gehalten. Danach wurde der Ansatz durch Zugabe von 900 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 71,3 ml/g, die Glastemperatur bei 225°C.

### Versuch 7 (Überschuss 4,4'-Dihydroxybiphenyl)

Durch nucleophile aromatische Polykondensation von 574,16 g (2,00 mol) 4,4'-Dichlordiphenylsulfon, 379,87 g (2,04 mol) 4,4'-Dihydroxybiphenyl, unter Einwirkung von 286,09 g (2,07 mol) Kaliumcarbonat (Pottasche A) in 2100 ml NMP wurde ein Polybiphenylsulfon erhalten. Diese Mischung wurde 6 Stunden bei 190°C gehalten. Danach wurde der Ansatz durch Zugabe von 900 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 71,2 ml/g, die Glastemperatur bei 225°C.

### Versuch 8 (Überschuss 4,4'-Dihydroxybiphenyl)

Durch nucleophile aromatische Polykondensation von 574,16 g (2,00 mol) 4,4'-Dichlordiphenylsulfon, 379,87 g (2,04 mol) 4,4'-Dihydroxybiphenyl, unter Einwirkung von 286,09 g (2,07 mol) Kaliumcarbonat (Pottasche A) in 2100 ml NMP wurde ein Polybiphenylsulfon erhalten. Diese Mischung wurde 6 Stunden bei 190°C gehalten. Danach wurde der Ansatz durch Zugabe von 900 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 72,0 ml/g, die Glastemperatur bei 225°C.

### Versuch 9 (Überschuss 4,4'-Dihydroxybiphenyl)

Durch nucleophile aromatische Polykondensation von 574,16 g (2,00 mol) 4,4'-Dichlordiphenylsulfon, 379,87 g (2,04 mol) 4,4'-Dihydroxybiphenyl, unter Einwirkung von 286,09 g (2,07 mol) Kaliumcarbonat (Pottasche B) in 2100 ml NMP wurde ein Polybiphenylsulfon erhalten. Diese Mischung wurde 8 Stunden bei 190°C gehalten. Danach wurde der Ansatz durch Zugabe von 900 ml NMP verdünnt. Die Suspension wurde dann bei 130°C 1 Stunde mit Methylchlorid (15 l/h) umgesetzt. Nach Abkühlen auf 80°C wurde die Suspension abgelassen, die festen Bestandteile wurden durch Filtration abgetrennt und das Polymere durch Fällung in NMP/Wasser 1/9 isoliert. Nach sorgfältigem Waschen mit Wasser wurde das Produkt im Vakuum bei 120°C für 12 h getrocknet. Die Viskositätszahl des Produkts lag bei 72,0 ml/g, die Glastemperatur bei 225°C.

**Tabelle 1:**

| Versuch | V1 | V2 | V3 | V4 | V5 | V6 | 7 | 8 | 9 |
|---|---|---|---|---|---|---|---|---|---|
| Cl-Gehalt [ppm] | 1400 | 1370 | 2200 | 1450 | 3050 | 3150 | 710 | 670 | 560 |
| Lösungsmittel-Gehalt [ppm] | n.b. | n.b. | 120 | 100 | 110 | 120 | 100 | 60 | 80 |
| E-Modul [MPa] | - | - | 2260 | 2260 | 2280 | 2270 | 2280 | 2260 | 2270 |
| Reißdehnung [%] | - | - | 33 | 47 | 21 | 22 | 78 | 81 | 76 |
| ISO 179 1eA [kJ/m²] | - | - | 68 | 67 | 67 | 66 | 71 | 72 | 72 |
| η(50 Hz)/ η(2000 Hz) | - | - | 6,8 | 5,9 | 4,8 | 4,7 | 3,2 | 3,1 | 3,3 |

Das erfindungsgemäße Verfahren ermöglicht die Kontrolle der Viskositätszahl über die Reaktionszeit (Versuche 7 bis 9). Überraschenderweise zeigen die erfindungsgemäßen Polybiphenylsulfon-Polymere gleichzeitig eine niedrige Viskosität bei einer Scherrate von 50 Hz im Verhältnis zur Viskosität bei einer Scherrate von 2000 Hz. Somit weisen die erfindungsgemäßen Polybiphenylsulfon-Polymere ein günstiges Fließverhalten bei niedrigen Scherraten auf, was insbesondere für die Formgebung in Formwerkzeugen günstig ist.

Die erfindungsgemäßen Polybiphenylsulfon-Polymere zeichnen sich außerdem durch eine Kombination aus geringem Gehalt an polymergebundenem Chlor, einem geringen Restlösungsmittelgehalt und einer verbesserten Reißdehnung aus.

## Patentansprüche

1. Verfahren zur Herstellung von Polybiphenylsulfon-Polymeren umfassend gemäß Schritt (a) die Umsetzung der Komponente (a1) bestehend aus mindestens einer aromatischen Dihydroxyverbindung und (a2) 4,4'-Dichlordiphenylsulfon, wobei die Komponente (a1) 4,4'-Dihydroxybiphenyl umfasst und die Umsetzung mit einem molaren Überschuss der Komponente (a1) in einem Lösungsmittel umfassend N-Methylpyrrolidon durchgeführt wird, und wobei das molare Verhältnis der Komponente (a1) zu (a2) von 1,01 bis 1,05 beträgt und der Umsatz (U) mindestens 95% beträgt, wobei Komponente (a1) mindestens 80 Gew.-% 4,4'-Dihydroxybiphenyl enthält und
wobei in Anschluss an Schritt (a) gemäß Schritt (b) eine Umsetzung mit mindestens einem Alkylchlorid erfolgt.

2. Verfahren nach Anspruch 1, wobei Komponente (a1) 4,4'-Dihydroxybiphenyl ist.

3. Verfahren nach den Ansprüchen 1 oder 2, wobei während der Umsetzung mindestens eine aromatische organische Monochlorverbindung als Komponente (a3) zugegeben wird.

4. Verfahren nach Anspruch 3, wobei die Komponente (a3) Monochlordiphenylsulfon ist.

5. Verfahren nach Anspruch 3 oder 4, wobei das Doppelte des Verhältnisses aus ((a1)-(a2)) / (a3) von 0,98 bis 1,02 beträgt, worin (a1), (a2) und (a3) die molaren Mengen der eingesetzten Komponenten (a1), (a2) und (a3) wiedergeben.

6. Verfahren nach Anspruch 5, wobei das Dappelte des Verhältnisses aus ((a1) - (a2)) / (a3) eins beträgt.

7. Verfahren nach den Ansprüchen 1 bis 6, wobei das Alkylchlorid Methylchlorid ist.

8. Polybiphenylsulfon-Polymere erhältlich gemäß den Ansprüchen 1 bis 7.

9. Polybiphenylsulfon-Polymere nach Anspruch 8 mit einem Gehalt an organisch gebundenem Chlor von weniger als 800 ppm.

10. Thermoplastische Formmassen enthaltend ein Polybiphenylsulfon-Polymer gemäß Anspruch 8 oder 9.

11. Thermoplastische Formmassen gemäß Anspruch 10, weiterhin enthaltend ein Polymer ausgewählt aus Polyethersulfon (PES), Polysulfon (PSU), Polyetherimiden, Polyphenylensulfiden, Polyetheretherketonen, Polyimiden und Poly-p-phenylenen.

12. Verwendung der thermoplastischen Formmassen gemäß Anspruch 10 oder 11 oder der Polybiphenylsulfon-Polymere gemäß Anspruch 8 oder 9 zur Herstellung von Formkörpern, Fasern, Filmen, Membranen oder Schäumen.

13. Formkörper, Fasern, Filme, Membrane oder Schäume enthaltend Polybiphenylsulfon-Polymere gemäß Anspruch 8 oder 9.

## Claims

1. A process for the production of polybiphenyl sulfone polymers comprising according to step (a) the reaction of component (a1) composed of at least one aromatic dihydroxy compound and (a2) 4,4'-dichlorodiphenyl sulfone, where component (a1) comprises 4,4'-dihydroxybiphenyl and the reaction is carried out with a molar excess of component (a1) in a solvent comprising N-methylpyrrolidone, and where the molar ratio of component (a1) to (a2) is from 1.01 to 1.05 and the conversion (U) is at least 95%, where component (a1) comprises at least 80% by weight of 4,4'-dihydroxybiphenyl and
where according to step (b), after step (a), a reaction takes place with at least one alkyl chloride.

2. The process according to claim 1, where component (a1) is 4,4'-dihydroxybiphenyl.

3. The process according to claims 1 or 2, where during the reaction at least one aromatic organic monochloro compound is added as component (a3).

4. The process according to claim 3, where component (a3) is monochlorodiphenyl sulfone.

5. The process according to claim 3 or 4, where the product of the ratio ((a1) - (a2)) / (a3) multiplied by two is from 0.98 to 1.02, where (a1), (a2) and (a3) are the molar amounts of components (a1), (a2) and (a3) used.

6. The process according to claim 5, where the product of the ratio ((a1) - (a2)) / (a3) multiplied by two is one.

7. The process according to claims 1 to 6, where the alkyl chloride is methyl chloride.

8. A polybiphenyl sulfone polymer obtainable according to claims 1 to 7.

9. A polybiphenyl sulfone polymer according to claim 8 with less than 800 ppm content of organically bonded chlorine.

10. A thermoplastic molding composition comprising a polybiphenyl sulfone polymer according to claim 8 or 9.

11. The thermoplastic molding composition according to claim 10, further comprising a polymer selected from polyether sulfone (PES), polysulfone (PSU), polyetherimides, polyphenylene sulfides, polyether ether ketones, polyimides, and poly-p-phenylenes.

12. The use of the thermoplastic molding compositions according to claim 10 or 11 or of the polybiphenyl sulfone polymers according to claim 8 or 9, for the production of moldings, of fibers, of films, of membranes or of foams.

13. A molding, fiber, film, membrane or foam comprising polybiphenyl sulfone polymers according to claim 8 or 9.

## Revendications

1. Procédé de préparation de polymères de type polybiphénylsulfone comprenant selon l'étape (a) la mise en réaction du composant (a1) constitué d'au moins un composé dihydroxy aromatique et (a2) la 4,4'-dichlorodiphénylsulfone, le composant (a1) comprenant le 4,4'-dihydroxybiphényle et la mise en réaction étant réalisée avec un excès molaire du composant (a1) dans un solvant comprenant de la N-méthylpyrrolidone, et le rapport molaire entre les composants (a1) et (a2) étant de 1,01 à 1,05 et la conversion (U) étant d'au moins 95 %, le composant (a1) contenant au moins 80 % en poids de 4,4'-dihydroxybiphényle et
après l'étape (a), selon une étape (b), une mise en réaction avec au moins un chlorure d'alkyle étant réalisée.

2. Procédé selon la revendication 1, dans lequel le composant (a1) est le 4,4'-dihydroxybiphényle.

3. Procédé selon la revendications 1 ou 2, dans lequel, pendant la réaction, au moins un composé organique aromatique monochloré est ajouté en tant que composant (a3) .

4. Procédé selon la revendication 3, dans lequel le composant (a3) est la monochlorodiphénylsulfone.

5. Procédé selon la revendication 3 ou 4, dans lequel le double du rapport ((a1)-(a2))/(a3) est de 0,98 à 1,02, (a1), (a2) et (a3) indiquant les quantités molaires des composants (a1), (a2) et (a3) utilisés.

6. Procédé selon la revendication 5, dans lequel le double du rapport ((a1)-(a2))/(a3) est de un.

7. Procédé selon les revendications 1 à 6, dans lequel le chlorure d'alkyle est le chlorure de méthyle.

8. Polymères de type polybiphénylsulfone pouvant être obtenus selon les revendications 1 à 7.

9. Polymères de type polybiphénylsulfone selon la revendication 8, ayant une teneur en chlore lié organiquement de moins de 800 ppm.

10. Masses à mouler thermoplastiques contenant un polymère de type polybiphénylsulfone selon la revendication 8 ou 9.

11. Masses à mouler thermoplastiques selon la revendication 10, contenant en outre un polymère choisi parmi la polyéthersulfone (PES), la polysulfone (PSU), les polyétherimides, les poly(sulfure de phénylène), les polyétheréthercétones, les polyimides et les poly-p-phénylènes.

12. Utilisation des masses à mouler thermoplastiques selon la revendication 10 ou 11 ou des polymères de type polybiphénylsulfone selon la revendication 8 ou 9 pour la fabrication de corps moulés, de fibres, de films, de membranes ou de mousses.

13. Corps moulés, fibres, films, membranes ou mousses contenant des polymères de type polybiphénylsulfone selon la revendication 8 ou 9.
